# EUROPÄISCHE PATENTSCHRIFT

(11) **EP 2 976 179 B1**
(45) Veröffentlichungstag und Bekanntmachung des Hinweises auf die Patenterteilung: **09.05.2018**
(21) Anmeldenummer: 14721187.4
(22) Anmeldetag: 18.03.2014
(51) Int. Cl.: B23P 15/10, B21K 1/18, B23K 35/02, F02F 3/26, F02F 3/00, F02B 23/06

(54) **VERFAHREN ZUR HERSTELLUNG EINES KOLBENS FÜR EINEN VERBRENNUNGSMOTOR**
METHOD FOR PRODUCING A PISTON FOR AN INTERNAL COMBUSTION ENGINE
PROCÉDÉ DE PRODUCTION D'UN PISTON POUR MOTEUR À COMBUSTION INTERNE

(30) Priorität: 18.03.2013 DE 102013004576; 28.08.2013 DE 102013014346
(43) Veröffentlichungstag der Anmeldung: 27.01.2016
(73) Patentinhaber: Mahle International GmbH, 70376 Stuttgart (DE)
(72) Erfinder: BERR, Gerhard, 71546 Aspach (DE); BOCZEK, Sascha-Oliver, 69234 Dielheim (DE); MÜLLER, Reiner, 78628 Rottweil (DE); SCHARP, Rainer, 71665 Vaihingen (DE)
(74) Vertreter: BRP Renaud & Partner mbB Rechtsanwälte Patentanwälte Steuerberater
(86) Internationale Anmeldenummer: PCT/DE2014/000137
(87) Internationale Veröffentlichungsnummer: WO 2014/146635

(56) Entgegenhaltungen:
- DE-A1-102007 061 601
- DE-A1-102011 013 067
- DE-A1-102011 013 141
- US-A1- 2007 079 775
- US-A1- 2012 260 882

## Beschreibung

Die vorliegende Erfindung betrifft ein Verfahren zur Herstellung eines Kolbens für einen Verbrennungsmotor, mit einem Kolbenoberteil und einem Kolbenunterteil, wobei das Kolbenoberteil einen Kolbenboden mit einer einen Dom aufweisenden Verbrennungsmulde, einen umlaufenden Feuersteg sowie eine umlaufende Ringpartie aufweist, wobei das Kolbenunterteil mit Nabenbohrungen versehene Kolbennaben aufweist, welche über Laufflächen miteinander verbunden sind, mit den folgenden Verfahrensschritten: a) Herstellen eines Rohlings des Kolbenoberteils mittels eines Umformverfahrens, b) Herstellen eines Rohlings des Kolbenunterteils mittels eines Umformverfahrens oder eines Gießverfahrens, c) Verbinden der Rohlinge von Kolbenoberteil und Kolbenunterteil zu einem Kolbenkörper mittels eines Schweißverfahrens, d) Nachbearbeitung und/oder Fertigbearbeitung des Kolbenkörpers zum fertigen Kolben.

Ein gattungsgemäßes Herstellungsverfahren sowie ein damit hergestellter Kolben sind aus den deutschen Patentanmeldungen 10 2011 013 141 A1 und DE 10 2011 013 067 A1 bekannt. Demnach wird der Rohling des Kolbenoberteils im Bereich der gesamten Verbrennungsmulde fertig geschmiedet, so dass die Kontur der Verbrennungsmulde von der Nachbearbeitung ausgenommen ist.

Die DE 10 2011 013 067 A1 offenbart ein Verfahren nach dem Oberbegriff des Anspruchs 1.

Es hat sich jedoch gezeigt, dass die lokale Erwärmung des Kolbenkörpers während des Verschweißens der Rohlinge eine Gefügeveränderung sowie den Abbau von Spannungen im Werkstoff bewirkt, die dazu führen, dass sich die Geometrie und somit das Volumen der Verbrennungsmulde verändert. Daher kann das Volumen der Verbrennungsmulde im fertigen Kolben erheblich von den vorgegebenen Werten abweichen. Da die Verbrennungsmulde fertig geschmiedet ist, ist eine zusätzliche spanende Bearbeitung nicht mehr möglich. Dies gilt insbesondere für Verbrennungsmulden mit komplexer Geometrien.

Die Aufgabe der vorliegenden Erfindung besteht darin, ein gattungsgemäßes Verfahren so weiterzuentwickeln, dass auf möglichst einfache Weise das Volumen der Verbrennungsmulde im fertigen Kolben auch bei komplexen Geometrien innerhalb des vorgegebenen Toleranzbereichs liegt.

Die Lösung besteht darin, dass in Schritt a) bei der Herstellung des Rohlings des Kolbenoberteils die Kontur der Verbrennungsmulde außerhalb des Bereichs des Doms fertig hergestellt wird, dass überschüssiger Werkstoff im Bereich des Doms der Verbrennungsmulde gebildet wird, und dass in Schritt d) der überschüssige Werkstoff im Bereich des Doms der Verbrennungsmulde in einer solchen Menge entfernt wird, dass ein vorbestimmtes Volumen der Verbrennungsmulde resultiert.

Gegenstand der vorliegenden Erfindung ist ferner ein mittels des erfindungsgemäßen Verfahrens herstellbarer Kolben.

Das erfindungsgemäße Verfahren zeichnet sich dadurch aus, dass bei der Herstellung des Kolbenoberteils mittels Umformverfahren im Bereich des Doms der Verbrennungsmulde überschüssiger Werkstoff gebildet wird, während der verbleibende Bereich der Verbrennungsmulde fertig hergestellt wird, d.h. keinerlei Nachbearbeitung mehr bedarf. Durch das Entfernen einer bestimmten Menge des überschüssigen Werkstoffs kann das vorbestimmte Volumen der Verbrennungsmulde nach dem Verschweißen der Rohlinge maßgenau eingestellt werden, ohne in die Geometrie der Verbrennungsmulde außerhalb des Bereichs des Doms einzugreifen.

Vorteilhafte Weiterbildungen ergeben sich aus den Unteransprüchen.

Es von Vorteil, in Schritt a), falls gewünscht, mindestens eine Ventilnische im Kolbenboden und/oder in der Verbrennungsmulde durch das Umformverfahren fertig herzustellen, so dass auch eine Nachbearbeitung der mindestens einen Ventilnische entfällt.

In Schritt a) kann auch der Kolbenboden durch das Umformverfahren fertig hergestellt werden, um auch diesbezüglich eine Nachbearbeitung zu vermeiden. In diesem Fall ist es zweckmäßig, dass überschüssiger Werkstoff zusätzlich im Bereich des Feuerstegs gebildet wird, da er in diesem Bereich auf einfache Weise entfernt werden kann, bspw. durch einfaches Abdrehen. Es muss lediglich sichergestellt werden, dass im Bereich des Doms der Verbrennungsmulde eine ausreichende Menge überschüssigen Werkstoffs gebildet wird, um das vorbestimmte Volumen der Verbrennungsmulde maßgenau einzustellen.

Eine Weiterbildung des erfindungsgemäßen Verfahrens sieht vor, dass in Schritt d) zur Kontrolle des Volumens der Verbrennungsmulde ein Bezugspunkt am tiefsten Punkt der Verbrennungsmulde und ein Bezugspunkt in Höhe des fertig hergestellten Kolbenbodens gewählt werden und damit die aktuelle Tiefe der Verbrennungsmulde bestimmt wird.

Stattdessen kann in Schritt a) überschüssiger Werkstoff zusätzlich im Bereich des Kolbenbodens gebildet werden. Dies hat den Vorteil, dass eine Nachbearbeitung des Kolbenbodens eine flexible Einstellung der Kompressionshöhe ermöglicht.

Eine Weiterbildung dieses Verfahrens sieht vor, dass in Schritt d) zur Kontrolle des Volumens der Verbrennungsmulde während der Entfernung des überschüssigen Werkstoffs im Dombereich der aktuelle tiefste Punkt der Verbrennungsmulde erfasst wird und daran eine senkrecht zur Kolbenmittelachse verlaufende Ebene angelegt wird, welche als Ausgangspunkt für die Fertigbearbeitung des Kolbenbodens verwendet wird.

In den Schritten a) und b) werden zweckmäßigerweise Schweißflächen sowie Kühlkanalbereiche in die Rohlinge eingebracht und fertig bearbeitet. Passgenaue Schweißflächen werden für den Schweißvorgang in Schritt c) benötigt. Die Kühlkanalbereiche sind nach dem Verschweißen der Rohlinge nicht mehr zugänglich.

Es ist ferner von Vorteil, zwischen Schritt b) und Schritt c) im Rohling des Kolbenunterteils der Innenraum fertig zu bearbeiten und in den Kühlkanalbereich Zu- und Ablauföffnungen für Kühlöl einzubringen. Das Kolbenunterteil ist zu diesem Zweck einfacher zu handhaben als der geschweißte Kolbenkörper.

Ferner empfiehlt es sich aus den gleichen Erwägungen, zwischen Schritt a) und Schritt c) am Rohling des Kolbenoberteils und/oder des Kolbenunterteils den Außendurchmesser vorzubearbeiten und/oder dass am Rohling des Kolbenunterteils die Kolbennaben vorzubearbeiten.

Eine bevorzugte Weiterbildung sieht vor, dass in Schritt d) die Nabenbohrungen in die Kolbennaben eingebracht werden, nachdem der Kolbenboden fertig bearbeitet ist. Da sich die Kompressionshöhe eines Kolbens aus dem Abstand zwischen Kolbenboden und Mittelachse der Nabenbohrung ergibt, kann auf besondere einfache Weise die vorbestimmte Kompressionshöhe des fertigen Kolbens erzielt werden.

Es können verschiedene Umformverfahren zur Herstellung des Rohlings des Kolbenoberteils gewählt werden. Der Rohling kann mittels Warmumformen bei 1.200°C bis 1.300°C geschmiedet und anschließend kaltkalibriert werden. Der Rohling kann auch mittels Warmumformen bei 1.200°C bis 1.300°C geschmiedet und anschließend bei einer Temperatur von höchstens 150°C kaltumgeformt werden. Der Rohling kann ferner mittels Halbwarmumformen bei 600°C bis 900°C geschmiedet werden. Zusätzlich kann der im Anschluss an das Halbwarmumformen bei einer Temperatur von höchstens 150°C kaltumgeformt werden. Schließlich kann der Rohling mittels Kaltumformen bei höchstens 150°C geschmiedet werden.

Zweckmäßigerweise werden in Schritt c) die Rohlinge mittels eines Reibschweißverfahrens miteinander verbunden. Die Anwendung eines Reibschweißverfahrens ist aber nicht zwingend.

Ausführungsbeispiele der vorliegenden Erfindung werden im Folgenden anhand der beigefügten Zeichnungen näher erläutert. Es zeigen in einer schematischen, nicht maßstabsgetreuen Darstellung:
- Figur 1: ein Ausführungsbeispiel eines mit dem erfindungsgemäßen Verfahren hergestellten Kolbens;
- Figur 2: ein erstes Ausführungsbeispiel eines Rohlings eines Kolbenoberteils für einen Kolben gemäß Figur 1;
- Figur 3: ein zweites Ausführungsbeispiel eines Rohlings eines Kolbenoberteils für einen Kolben gemäß Figur 1;
- Figur 4: ein drittes Ausführungsbeispiel eines Rohlings eines Kolbenoberteils für einen Kolben gemäß Figur 1;
- Figur 5: ein Ausführungsbeispiel einer Verbrennungsmulde mit Ventilnische für einen Kolben gemäß Figur 1.

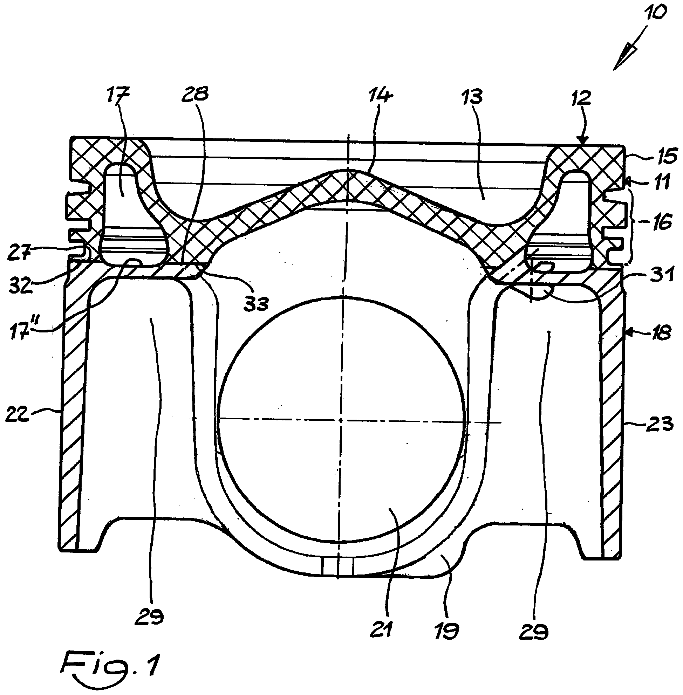

Figur 1 zeigt ein Ausführungsbeispiel eines erfindungsgemäßen Kolbens 10. Der Kolben 10 weist ein Kolbenoberteil 11 mit einem Kolbenboden 12 auf. Im Kolbenboden 12 ist eine Verbrennungsmulde 13 mit einem zentralen Dom 14 versehen. Das Kolbenoberteil 11 weist ferner einen umlaufenden Feuersteg 15 und eine umlaufenden Ringpartie 16 mit Ringnuten zur Aufnahme von Kolbenringen (nicht dargestellt) auf. In Höhe der Ringpartie 16 ist ein umlaufender Kühlkanal 17 vorgesehen.

Der Kolben 10 weist ferner ein Kolbenunterteil 18 mit Kolbennaben 19 und Nabenbohrungen 21 zur Aufnahme eines Kolbenbolzens (nicht dargestellt) auf. Die Kolbennaben 19 sind über Laufflächen 22, 23 miteinander verbunden.

Im vorliegenden Ausführungsbeispiel sind das Kolbenoberteil 11 und das Kolbenunterteil 18 mittels eines Reibschweißverfahrens miteinander verbunden.

Das Kolbenoberteil 11 ist aus einem Werkstoff hergestellt, der einem Umformverfahren unterzogen werden kann. Typischerweise handelt es sich hierbei um einen Vergütungsstahl, bspw. 42CrMo4 oder einen AFP-Stahl wie 38MnVS6.

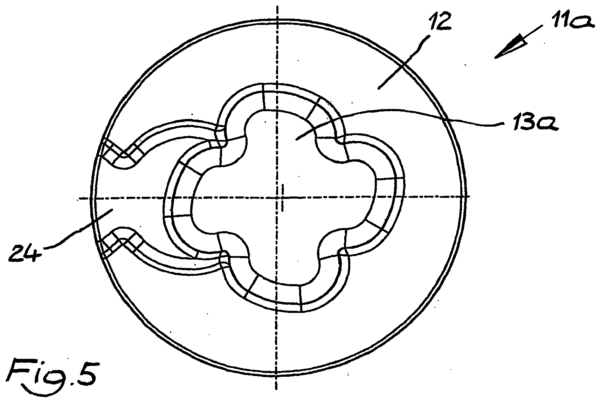

Erfindungsgemäß soll ein Kolben 10 hergestellt werden, dessen Verbrennungsmulde 13 ein Volumen innerhalb eines vorbestimmten Toleranzbereichs aufweist. Dieses Ziel soll unabhängig von der Geometrie der Verbrennungsmulde erreicht werden, so dass auch eine Verbrennungsmulde komplexer Geometrie, wie sie beispielhaft in Figur 5 dargestellt, nach Abschluss des Herstellungsverfahrens ein Volumen innerhalb des vorbestimmten Toleranzbereichs aufweist. Figur 5 zeigt eine Draufsicht auf eine Verbrennungsmulde 13a in einem Kolbenoberteil 11a. Die Verbrennungsmulde 13a weist eine kleeblattähnliche Kontur auf. In den Kolbenboden 12 ist zusätzlich eine Ventilnische 24 eingeformt. Das erfindungsgemäße Ziel soll mittels des erfindungsgemäßen Verfahrens auch für Verbrennungsmulden erreicht werden, die gegenüber der Kolbenmittelachse radial versetzt oder geneigt angeordnet sind.

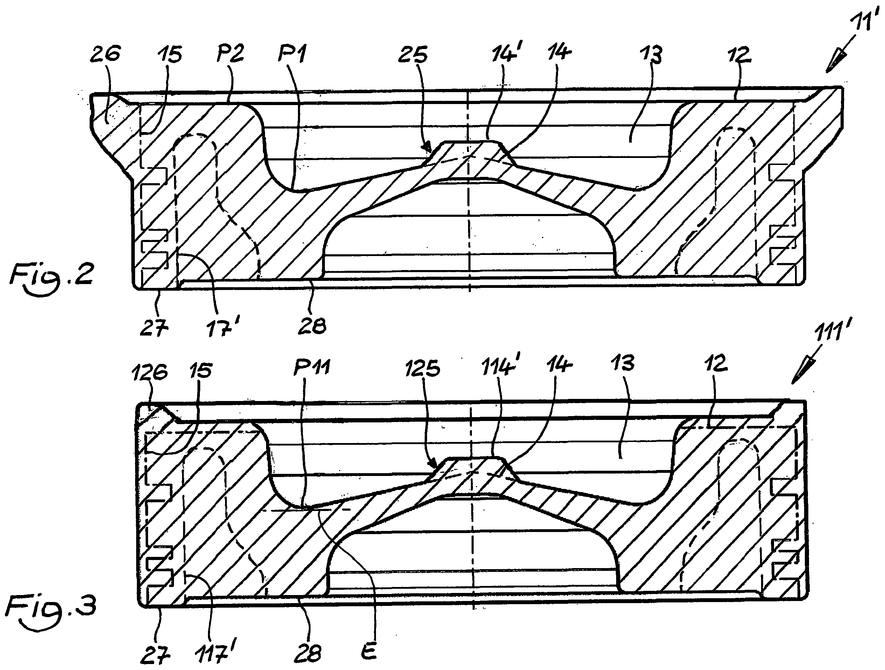

Zu diesem Zweck wird zunächst ein Rohling für das Kolbenoberteil 11 durch Umformen hergestellt. Ein erstes Ausführungsbeispiel eines derartigen Rohlings 11' ist in Figur 2 dargestellt. Der Rohling 11' wurde im Ausführungsbeispiel mittels Halbwarmumformen bei 600° bis 900° und anschließendes Kaltumformen bei höchstens 150°C geschmiedet. Der Rohling 11' ist im Schnitt schraffiert dargestellt, während die Endkonturen des Kolbenoberteils 11 im fertigen Kolben 10 strichpunktiert angedeutet sind. Im Ausführungsbeispiel sind die Geometrie der Verbrennungsmulde 13 mit Ausnahme des Dombereichs 14' rund um den Dom 14 sowie der Kolbenboden 12 fertig geschmiedet. Das bedeutet, dass zur Herstellung der fertigen Kolbens 10 keinerlei Nachbearbeitung des Kolbenbodens 12 und der Verbrennungsmulde 13 mit Ausnahme des Dombereichs 14' erforderlich ist.

Wesentlich ist, dass der Dombereich 14' nach dem Schmieden eine ausreichende Menge überschüssigen Werkstoffs 25 aufweist, um das Volumen der Verbrennungsmulde erfindungsgemäß maßgenau einzustellen (siehe dazu weiter unten). Weiterer überschüssiger Werkstoff 26, der zur Einstellung des Volumens der Verbrennungsmulde 13 nicht benötigt wird, kann außerhalb des Kolbenbodens 12 im Bereich des späteren Feuerstegs 15 gebildet werden.

Nach dem Schmieden kann der Außendurchmesser des Rohlings 11' vorbearbeitet werden, wobei insbesondere der überschüssige Werkstoff 26 entfernt werden kann. Ferner wird ein Kühlkanalbereich 17', der im fertigen Kolben 10 einen Teil des Kühlkanals 17 bildet, in den Rohling 11' eingearbeitet. Der Kühlkanalbereich 17' kann auch während des Schmiedens eingebracht werden und wird in diesem Fall nach dem Schmieden fertigbearbeitet. Schließlich werden nach dem Schmieden die Schweißflächen 27, 28, über die der Rohling mit dem Rohling des Kolbenunterteils 18 verbunden werden soll (vgl. Figur 1), fertigbearbeitet.

Ein Rohling des Kolbenunterteils 18 kann aus jedem geeigneten Werkstoff durch Umformen oder Gießen hergestellt werden. In an sich bekannter Weise können der Außendurchmesser sowie der Nabenbereich des Rohlings vorbearbeitet werden. Ferner werden der Innenraum 29 sowie ein Kühlkanalbereich 17", der im fertigen Kolben 10 einen Teil des Kühlkanals 17 bildet, fertig bearbeitet. In den Kühlkanalbereich 17" werden Zu- und Ablauföffnungen 31 für Kühlöl eingebracht (vgl. Figur 1). Schließlich werden nach dem Schmieden die Schweißflächen 32, 33, über die der Rohling 11' mit dem Rohling des Kolbenoberteils 11 verbunden werden soll (vgl. Figur 1), fertigbearbeitet.

Nun werden die Rohlinge mittels eines Reibschweißverfahrens über ihre Schweißflächen 27, 28, 32, 33 in an sich bekannter Weise miteinander verbunden. Hierbei führt das Reibschweißverfahren zu einer lokalen Erwärmung des Werkstoffes im Bereich der Schweißflächen 27, 28, 32, 33. Diese lokale Erwärmung bewirkt eine Gefügeveränderung sowie den Abbau von Spannungen im Werkstoff. Dies führt in der Regel dazu, dass die Geometrie und damit das Volumen der Verbrennungsmulde 13 nunmehr erheblich von den für den fertigen Kolben (10) vorgegebenen Werten abweichen.

In einem nächsten Verfahrensschritt wird nun an dem aus dem Verschweißen resultierenden Kolbenkörper der Dombereich 14' nachbearbeitet, indem der überschüssige Werkstoff 25 entfernt wird. Dies geschieht in einem solchen Maße, dass dadurch das vorbestimmte Volumen nach dem Verschweißen der Rohlinge maßgenau eingestellt wird, ohne in die Geometrie der Verbrennungsmulde 13 außerhalb des Dombereichs 14' einzugreifen. Der verbleibende Bereich der Verbrennungsmulde ist bereits durch das Umformverfahren fertig hergestellt wird, d.h. er bedarf keinerlei Nachbearbeitung mehr.

Während dieses Vorgangs wird das Volumen der Verbrennungsmulde 13 kontrolliert. Hierfür werden ein Bezugspunkt P1 am tiefsten Punkt der Verbrennungsmulde 13 und ein Bezugspunkt P2 in Höhe des fertig hergestellten Kolbenbodens 12 gewählt. Damit wird die aktuelle Tiefe der Verbrennungsmulde 13 bestimmt. Liegt bspw. die Tiefe der Verbrennungsmulde 13 an der oberen Toleranzgrenze, muss die Bearbeitung im Dombereich 14' im Wesentlichen an der unteren Toleranzgrenze liegen, so dass das tatsächliche Volumen der Verbrennungsmulde 13 im Ergebnis möglichst in der Mitte des Toleranzbereichs des vorbestimmten Volumens liegt.

Zum Abschluss des erfindungsgemäßen Verfahrens wird der Kolbenkörper fertig bearbeitet, indem bspw. die endgültige Feinkontur hergestellt und die Ringnuten in die Ringpartie 16 sowie die Nabenbohrungen 21 in die Kolbennabe 19 eingebracht werden. Die Nabenbohrungen 21 werden derart eingebracht, dass sich aus ihrer Mittelachse in Bezug auf den Kolbenboden 12 die vorbestimmte Kompressionshöhe des fertigen Kolbens ergibt. Im Ergebnis wird ein Kolben gemäß Figur 1 erhalten.

Ein zweites Ausführungsbeispiel eines derartigen Rohlings 111' für ein Kolbenoberteil 11 ist in Figur 3 dargestellt. Der Rohling 111' wurde im Ausführungsbeispiel mittels Warmumformen bei 1.200° bis 1.300° geschmiedet und anschließend mittels Kaltkalibrieren (Pressen der Oberflächen des Rohlings 111' bei Raumtemperatur) weiterbearbeitet. Der Rohling 111' ist im Schnitt schraffiert dargestellt, während die Endkonturen des Kolbenoberteils 11 im fertigen Kolben 10 strichpunktiert angedeutet sind. Im Ausführungsbeispiel ist die Geometrie der Verbrennungsmulde 13 mit Ausnahme des Dombereichs 114' rund um den Dom 14 fertig geschmiedet. Das bedeutet, dass zur Herstellung der fertigen Kolbens 10 keinerlei Nachbearbeitung der Verbrennungsmulde 13 mit Ausnahme des Dombereichs 114' erforderlich ist. Wesentlich ist, dass der Dombereich 114' nach dem Schmieden eine ausreichende Menge überschüssigen Werkstoffs 125 aufweist, um das Volumen der Verbrennungsmulde erfindungsgemäß maßgenau einzustellen (siehe dazu weiter unten). Weiterer überschüssiger Werkstoff 126, der zur Einstellung des Volumens der Verbrennungsmulde 13 nicht benötigt wird, kann außerhalb des späteren Kolbenbodens 12 im Bereich des späteren Kolbenbodens gebildet werden.

Nach dem Schmieden kann der Außendurchmesser des Rohlings 111' vorbearbeitet werden. Ferner wird ein Kühlkanalbereich 117', der im fertigen Kolben 10 einen Teil des Kühlkanals 17 bildet, in den Rohling 111' eingearbeitet. Der Kühlkanalbereich 117' kann auch während des Schmiedens eingebracht werden und wird in diesem Fall nach dem Schmieden fertigbearbeitet. Schließlich werden nach dem Schmieden die Schweißflächen 127, 128, über die der Rohling 111' mit dem Rohling des Kolbenunterteils 18 verbunden werden soll (vgl. Figur 1), fertigbearbeitet.

Der Rohling 111' wird wie oben beschrieben mit einem Rohling für einen Kolbengrundkörper 18 über ihre Schweißflächen 27, 28, 32, 33 in an sich bekannter Weise miteinander verbunden (vgl. Figur 1). Hierbei führt das Reibschweißverfahren zu einer lokalen Erwärmung des Werkstoffes im Bereich der Schweißflächen 27, 28, 32, 33. Diese lokale Erwärmung bewirkt eine Gefügeveränderung sowie den Abbau von Spannungen im Werkstoff. Dies führt in der Regel dazu, dass die Geometrie und somit das Volumen der Verbrennungsmulde 13 nunmehr erheblich von den für den fertigen Kolben 10 vorgegebenen Werten abweicht.

In einem nächsten Verfahrensschritt wird nun an dem aus dem Verschweißen resultierenden Kolbenkörper der Dombereich 114' nachbearbeitet, indem der überschüssige Werkstoff 125 entfernt wird. Dies geschieht in einem solchen Maße, dass dadurch das vorbestimmte Volumen nach dem Verschweißen der Rohlinge maßgenau eingestellt wird, ohne in die Geometrie der Verbrennungsmulde 13 außerhalb des Dombereichs 114' einzugreifen. Der verbleibende Bereich der Verbrennungsmulde ist bereits durch das Umformverfahren fertig hergestellt wird, d.h. er bedarf keinerlei Nachbearbeitung mehr.

Zur Kontrolle des Volumens der Verbrennungsmulde (13) wird während der Entfernung des überschüssigen Werkstoffs 125 im Dombereich 114' der aktuelle tiefste Punkt P11 der Verbrennungsmulde 13 erfasst wird und daran eine senkrecht zur Kolbenmittelachse verlaufende Ebene E angelegt wird, welche als Ausgangspunkt für die Fertigbearbeitung des Kolbenbodens 12 verwendet wird (vgl. Figur 3).

Zum Abschluss des erfindungsgemäßen Verfahrens wird der Kolbenkörper fertig bearbeitet, indem bspw. die endgültige Feinkontur hergestellt und die Ringnuten in die Ringpartie 16 sowie die Nabenbohrungen 21 in die Kolbennabe 19 eingebracht werden. Ferner wird der Kolbenboden 12 fertig bearbeitet, indem der überschüssige Werkstoff 126 entfernt wird. Die Nabenbohrungen 21 werden anschließend derart eingebracht, dass sich aus ihrer Mittelachse in Bezug auf den Kolbenboden 12 die vorbestimmte Kompressionshöhe des fertigen Kolbens ergibt. Hierbei kann über die Menge des entfernten Werkstoffs der Abstand zwischen Kolbenboden 12 und Mittelachse der Nabenbohrungen 21 variiert werden. Im Ergebnis wird ein Kolben gemäß Figur 1 erhalten.

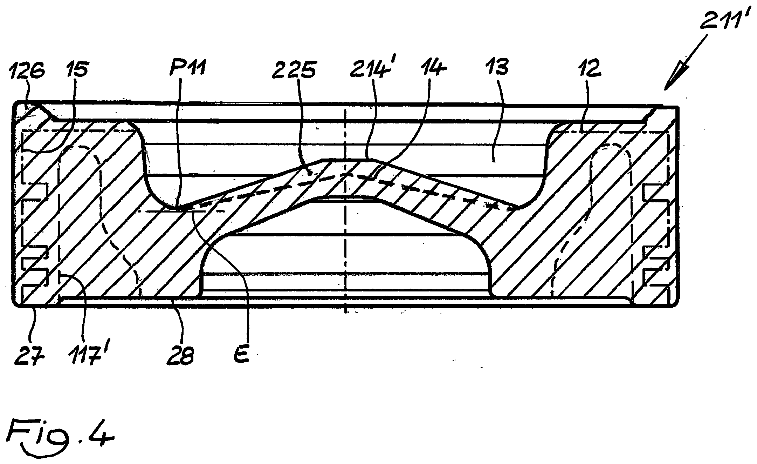

Ein drittes Ausführungsbeispiel eines derartigen Rohlings 211' für ein Kolbenoberteil 11 ist in Figur 4 dargestellt. Der Rohling 211' entspricht im Wesentlichen dem Rohling 111' gemäß Figur 3, so dass für gemeinsame Strukturen gleiche Bezugszeichen verwendet werden und insoweit auf die Beschreibung zu Figur 3 verwiesen wird. Der Rohling 211' ist im Schnitt schraffiert dargestellt, während die Endkonturen des Kolbenoberteils 11 im fertigen Kolben 10 strichpunktiert angedeutet sind. Im Ausführungsbeispiel ist die Geometrie der Verbrennungsmulde 13 mit Ausnahme des Dombereichs 214' fertig geschmiedet. Der Dombereich 214' erstreckt sich von der Spitze des Domes 14 bis zum tiefsten Punkt P11 der Verbrennungsmulde 13. Das bedeutet, dass zur Herstellung der fertigen Kolbens 10 keinerlei Nachbearbeitung der Verbrennungsmulde 13 mit Ausnahme des Dombereichs 214' erforderlich ist.

Wesentlich ist, dass der Dombereich 214' nach dem Schmieden eine ausreichende Menge überschüssigen Werkstoffs 225 aufweist, um das Volumen der Verbrennungsmulde erfindungsgemäß maßgenau einzustellen (siehe dazu weiter unten). Weiterer überschüssiger Werkstoff 126, der zur Einstellung des Volumens der Verbrennungsmulde 13 nicht benötigt wird, kann im Bereich des späteren Kolbenbodens 12 gebildet werden.

Gemäß dem für das Ausführungsbeispiel nach Figur 3 beschriebenen Herstellungsverfahren wird an.dem aus dem Verschweißen resultierenden Kolbenkörper der Dombereich 214' nachbearbeitet, indem der überschüssige Werkstoff 225 entfernt wird. Dies geschieht in einem solchen Maße, dass dadurch das vorbestimmte Volumen nach dem Verschweißen der Rohlinge maßgenau eingestellt wird, ohne in die Geometrie der Verbrennungsmulde 13 außerhalb des Dombereichs 214' einzugreifen. Der verbleibende Bereich der Verbrennungsmulde ist bereits durch das Umformverfahren fertig hergestellt wird, d.h. er bedarf keinerlei Nachbearbeitung mehr.

Zur Kontrolle des Volumens der Verbrennungsmulde (13) wird während der Entfernung des überschüssigen Werkstoffs 225 im Dombereich 214' der aktuelle tiefste Punkt P11 der Verbrennungsmulde 13 erfasst wird und daran eine senkrecht zur Kolbenmittelachse verlaufende Ebene E angelegt wird, welche als Ausgangspunkt für die Fertigbearbeitung des Kolbenbodens 12 verwendet wird (vgl. Figur 4).

Die Fertigbearbeitung erfolgt wie für das Ausführungsbeispiel gemäß Figur 3 beschrieben. Im Ergebnis wird ein Kolben gemäß Figur 1 erhalten.

## Patentansprüche

1. Verfahren zur Herstellung eines Kolbens (10) für einen Verbrennungsmotor mit einem Kolbenoberteil (11) und einem Kolbenunterteil (18), wobei das Kolbenoberteil (11) einen Kolbenboden (12) mit einer einen Dom (14) aufweisenden Verbrennungsmulde (13), einen umlaufenden Feuersteg (15) sowie eine umlaufende Ringpartie (16) aufweist, wobei das Kolbenunterteil (18) mit Nabenbohrungen (21) versehene Kolbennaben (19) aufweist, welche über Laufflächen (23, 24) miteinander verbunden sind, mit den folgenden Verfahrensschritten:
a) Herstellen eines Rohlings (11', 111', 211') des Kolbenoberteils (11) mittels eines Umformverfahrens,
b) Herstellen eines Rohlings des Kolbenunterteils (18) mittels eines Umformverfahrens oder eines Gießverfahrens,
c) Verbinden der Rohlinge von Kolbenoberteil (11) und Kolbenunterteil (12) zu einem Kolbenkörper mittels eines Schweißverfahrens,
d) Nachbearbeitung und/oder Fertigbearbeitung des Kolbenkörpers zum fertigen Kolben (10);
**dadurch gekennzeichnet, dass** in Schritt a) bei der Herstellung des Rohlings (11', 111', 211') des Kolbenoberteils (11) die Kontur der Verbrennungsmulde (13) außerhalb eines Dombereichs (14', 114', 214') fertig hergestellt wird, dass überschüssiger Werkstoff (25, 125, 225) im Dombereich (14'; 114', 214') der Verbrennungsmulde (13) gebildet wird, und dass in Schritt d) der überschüssige Werkstoff (25, 125, 225) im Dombereich (14', 114', 214') der Verbrennungsmulde (13) in einer solchen Menge entfernt wird, dass ein vorbestimmtes Volumen der Verbrennungsmulde (13) resultiert.

2. Verfahren nach Anspruch 1, **dadurch gekennzeichnet, dass** in Schritt a) mindestens eine Ventilnische (24) im Kolbenboden (12) und/oder in der Verbrennungsmulde (13) fertig hergestellt wird.

3. Verfahren nach Anspruch 1, **dadurch gekennzeichnet, dass** in Schritt a) der Kolbenboden (12) fertig hergestellt wird.

4. Verfahren nach Anspruch 3, **dadurch gekennzeichnet, dass** in Schritt a) überschüssiger Werkstoff (26) zusätzlich im Bereich des Feuerstegs (15) gebildet wird.

5. Verfahren nach Anspruch 3, **dadurch gekennzeichnet, dass** in Schritt d) zur Kontrolle des Volumens der Verbrennungsmulde (13) ein Bezugspunkt (P1) am tiefsten Punkt der Verbrennungsmulde (13) und ein Bezugspunkt (P2) in Höhe des fertig hergestellten Kolbenbodens (12) gewählt werden und damit die aktuelle Tiefe der Verbrennungsmulde (13) bestimmt wird.

6. Verfahren nach Anspruch 1, **dadurch gekennzeichnet, dass** in Schritt a) überschüssiger Werkstoff (126) zusätzlich im Bereich des Kolbenbodens (12) gebildet wird.

7. Verfahren nach Anspruch 6, **dadurch gekennzeichnet, dass** in Schritt d) zur Kontrolle des Volumens der Verbrennungsmulde (13) während der Entfernung des überschüssigen Werkstoffs (125, 225) im Dombereich (14') der aktuelle tiefste Punkt (P11) der Verbrennungsmulde (13) erfasst wird und daran eine senkrecht zur Kolbenmittelachse verlaufende Ebene (E) angelegt wird, welche als Ausgangspunkt für die Fertigbearbeitung des Kolbenbodens (12) verwendet wird.

8. Verfahren nach Anspruch 1, **dadurch gekennzeichnet, dass** in den Schritten a) und b) Schweißflächen (27, 28; 32, 33) sowie Kühlkanalbereiche (17', 117'; 17") in die Rohlinge eingebracht und fertig bearbeitet werden.

9. Verfahren nach Anspruch 1, **dadurch gekennzeichnet, dass** zwischen Schritt b) und Schritt c) im Rohling des Kolbenunterteils (18) der Innenraum (29) fertig bearbeitet wird und in den Kühlkanalbereich (17") Zu- und Ablauföffnungen (31) für Kühlöl eingebracht werden.

10. Verfahren nach Anspruch 1, **dadurch gekennzeichnet, dass** zwischen Schritt a) und Schritt c) am Rohling (11', 111' 211') des Kolbenoberteils (11) und/oder des Kolbenunterteils (18) der Außendurchmesser vorbearbeitet wird und/oder dass am Rohling des Kolbenunterteils (18) die Kolbennaben (19) vorbearbeitet werden.

11. Verfahren nach Anspruch 1, **dadurch gekennzeichnet, dass** in Schritt d) die Nabenbohrungen (21) in die Kolbennaben (19) eingebracht werden, nachdem der Kolbenboden (12) fertig bearbeitet ist.

12. Verfahren nach Anspruch 1, **dadurch gekennzeichnet, dass** der Rohling (11', 111', 211') des Kolbenoberteils (11) mittels Warmumformen bei 1.200°C bis 1.300°C geschmiedet und anschließend kaltkalibriert wird.

13. Verfahren nach Anspruch 1, **dadurch gekennzeichnet, dass** der Rohling (11', 111', 211') des Kolbenoberteils (11) mittels Warmumformen bei 1.200°C bis 1.300°C geschmiedet und anschließend bei einer Temperatur von höchstens 150°C kaltumgeformt wird.

14. Verfahren nach Anspruch 1, **dadurch gekennzeichnet, dass** der Rohling (11', 111', 211') des Kolbenoberteils (11) mittels Halbwarmumformen bei 600°C bis 900°C geschmiedet wird.

15. Verfahren nach Anspruch 14, **dadurch gekennzeichnet, dass** der Rohling (11', 111', 211') des Kolbenoberteils (11) im Anschluss an das Halbwarmumformen bei einer Temperatur von höchstens 150°C kaltumgeformt wird.

## Claims

1. Method for manufacturing a piston (10) for an internal combustion engine with a piston upper part (11) and a piston lower part (18), wherein the piston upper part (11) has a piston bottom (12) with a combustion cavity (13) comprising a dome (14), a circumferential top land (15) and a circumferential ring part (16), wherein the piston lower part (18) has piston hubs (19) provided with hub boreholes (21), which are connected to one another via running surfaces (23, 24), with the following method steps:
a) manufacturing a blank (11', 111', 211') of the piston upper part (11) by means of a forming process;
b) manufacturing a blank of the piston lower part (18) by means of a forming process or a casting process;
c) connecting the blanks of piston upper part (11) and piston lower part (12) to a piston body by means of a welding process;
d) reworking and/or finishing the piston body into a completed piston (10);
**characterised in that** in step a) when manufacturing the blank (11', 111', 211') of the piston upper part (11) the contour of the combustion cavity (13) outside of a dome region (14', 114', 214') is completed **in that** excess material (25, 125, 225) is formed in the dome region (14'; 114', 214') of the combustion cavity (13) and **in that** in step d) the excess material (25, 125, 225) in the dome region (14', 114', 214') is removed from the combustion cavity (13) in such a quantity that a predetermined volume of the combustion cavity (13) results.

2. Method according to claim 1, **characterised in that** in step a) at least one valve niche (24) is completed in the piston bottom (12) and/or in combustion cavity (13).

3. Method according to claim 1, **characterised in that** in step a) the piston bottom (12) is completed.

4. Method according to claim 3, **characterised in that** in step a), excess material (26) is also formed in the region of the top land (15).

5. Method according to claim 3, **characterised in that** in step d), in order to control the volume of the combustion cavity (13), a reference point (P1) is selected at the deepest point of the combustion cavity (13) and a reference point (P2) is selected at the height of the completed piston bottom (12) and thus the current depth of the combustion cavity (13) is determined.

6. Method according to claim 1, **characterised in that** in step a), excess material (126) is also formed in the region of the piston bottom (12).

7. Method according to claim 6, **characterised in that** in step d), in order to control the volume of the combustion cavity (13) during the removal of the excess material (125, 225) in the dome region (14'), the current deepest point (P11) of the combustion cavity (13) is detected and a plane (E) running perpendicular to the piston centre axis is applied thereon which is used as the starting point for completing the piston bottom (12).

8. Method according to claim 1, **characterised in that** in steps a) and b), welding surfaces (27, 28, 32, 33) and cooling channel regions (17', 117', 17") are introduced into the blanks and completed.

9. Method according to claim 1, **characterised in that** the interior (29) is completed between step b) and step c) in the blank of the piston lower part (18) and inflow and outflow openings (31) for cooling oil are introduced into the cooling channel region (17").

10. Method according to claim 1, **characterised in that** the outer diameter is prepared between step a) and step c) on the blank (11', 111', 211') of the piston upper part (11) and/or the piston lower part (18) and/or **in that** the channel hubs (19) are prepared on the blank of the piston lower part (18).

11. Method according to claim 1, **characterised in that** in step d), the hub boreholes (21) are introduced into the piston hubs (19) after the piston bottom (12) has been completed.

12. Method according to claim 1, **characterised in that** the blank (11', 111', 211') of the piston upper part (11) is forged by means of hot forming at 1,200°C to 1,300°C and then cold calibrated.

13. Method according to claim 1, **characterised in that** the blank (11', 111', 211') of the piston upper part (11) is forged by means of hot forming at 1,200°C to 1,300°C and then is cold formed at a temperature of at most 150°C.

14. Method according to claim 1, **characterised in that** the blank (11', 111', 211') of the piston upper part (11) is forged by means of semi-hot forming at 600°C to 900°C.

15. Method according to claim 14, **characterised in that** the blank (11', 111', 211') of the piston upper part (11) is cold formed following the semi-hot forming at a temperature of at most 150°C.

## Revendications

1. Procédé de production d'un piston (10) pour un moteur à combustion interne avec une partie supérieure de piston (11) et une partie inférieure de piston (18), dans lequel la partie supérieure de piston (11) présente un fond de piston (12) avec une cavité de combustion (13) présentant un dôme (14), un cordon de feu (15) périphérique ainsi qu'une partie annulaire (16) périphérique, dans lequel la partie inférieure de piston (18) présente des moyeux de piston (19) pourvus d'alésages de moyeu (21), qui sont raccordés par le biais de surfaces de portée (23, 24) entre eux, avec les étapes de procédé suivantes consistant à :
a) produire une ébauche (11', 111', 211') de la partie supérieure de piston (11) au moyen d'un procédé de façonnage,
b) produire une ébauche de la partie inférieure de piston (18) au moyen d'un procédé de façonnage ou d'un procédé de coulée,
c) raccorder les ébauches de la partie supérieure de piston (11) et la partie inférieure de piston (12) en un corps de piston au moyen d'un procédé de soudage,
d) assurer l'usinage ultérieur et/ou la finition du corps de piston pour obtenir un piston (10) fini ;
**caractérisé en ce qu'**à l'étape a) lors de la production de l'ébauche (11', 111', 211') de la partie supérieure de piston (11) le contour de la cavité de combustion (13) est fini en dehors d'une zone de dôme (14', 114', 214'), **en ce que** du matériau excédentaire (25, 125, 225) est formé dans la zone de dôme (14' ; 114', 214') de la cavité de combustion (13), et **en ce qu'**à l'étape d) le matériau excédentaire (25, 125, 225) dans la zone de dôme (14', 114', 214') de la cavité de combustion (13) est enlevé dans une telle quantité qui permet d'obtenir un volume prédéterminé de la cavité de combustion (13).

2. Procédé selon la revendication 1, **caractérisé en ce qu'**à l'étape a) au moins une niche de soupape (24) est finie dans le fond de piston (12) et/ou dans la cavité de combustion (13).

3. Procédé selon la revendication 1, **caractérisé en ce qu'**à l'étape a) le fond de piston (12) est fini.

4. Procédé selon la revendication 3, **caractérisé en ce qu'**à l'étape a) du matériau excédentaire (26) est en plus formé dans la zone du cordon de feu (15).

5. Procédé selon la revendication 3, **caractérisé en ce qu'**à l'étape d) pour le contrôle du volume de la cavité de combustion (13) un point de référence (P1) est choisi au point le plus bas de la cavité de combustion (13) et un point de référence (P2) est choisi au niveau du fond de piston (12) fini et ainsi la profondeur actuelle de la cavité de combustion (13) est déterminée.

6. Procédé selon la revendication 1, **caractérisé en ce qu'**à l'étape a) du matériau excédentaire (126) est en plus formé dans la zone du fond de piston (12).

7. Procédé selon la revendication 6, **caractérisé en ce qu'**à l'étape d) pour le contrôle du volume de la cavité de combustion (13) pendant le retrait du matériau excédentaire (125, 225) dans la zone de dôme (14') le point le plus bas (P11) actuel de la cavité de combustion (13) est détecté et un plan (E) s'étendant perpendiculairement à l'axe médian de piston est posé dessus, lequel est utilisé comme point de départ pour la finition du fond de piston (12).

8. Procédé selon la revendication 1, **caractérisé en ce qu'**aux étapes a) et b) des surfaces de soudure (27, 28 ; 32, 33) ainsi que des zones de canal de refroidissement (17', 117' ; 17") sont introduites et finies dans les ébauches.

9. Procédé selon la revendication 1, **caractérisé en ce qu'**entre l'étape b) et l'étape c) dans l'ébauche de la partie inférieure de piston (18) l'espace intérieur (29) est fini et des ouvertures d'entrée et de sortie (31) pour l'huile de refroidissement sont introduites dans la zone de canal de refroidissement (17").

10. Procédé selon la revendication 1, **caractérisé en ce qu'**entre l'étape a) et l'étape c) sur l'ébauche (11', 111', 211') de la partie supérieure de piston (11) et/ou de la partie inférieure de piston (18) le diamètre extérieur est préusiné et/ou **en ce que** sur l'ébauche de la partie inférieure de positon (18) les moyeux de piston (19) sont préusinés.

11. Procédé selon la revendication 1, **caractérisé en ce qu'**à l'étape d) les alésages de moyeu (21) sont introduits dans les moyeux de piston (19) après que le fond de piston (12) est fini.

12. Procédé selon la revendication 1, **caractérisé en ce que** l'ébauche (11', 111', 211') de la partie supérieure de piston (11) est forgée par façonnage à chaud de 1200 °C à 1300 °C et est ensuite calibrée à froid.

13. Procédé selon la revendication 1, **caractérisé en ce que** l'ébauche (11', 111', 211') de la partie supérieure de piston (11) est forgée par façonnage à chaud de 1200 °C à 1300 °C et est ensuite façonnée à froid à une température d'au plus 150 °C.

14. Procédé selon la revendication 1, **caractérisé en ce que** l'ébauche (11', 111', 211') de la partie supérieure de piston (11) est forgée par façonnage à mi-chaud de 600 °C à 900 °C.

15. Procédé selon la revendication 14, **caractérisé en ce que** l'ébauche (11', 111', 211') de la partie supérieure de piston (11) est façonnée à froid à la suite du façonnage à mi-chaud à une température d'au plus 150 °C.
